# EUROPÄISCHE PATENTSCHRIFT

(11) **EP 0 702 776 B1**
(45) Veröffentlichungstag und Bekanntmachung des Hinweises auf die Patenterteilung: **17.05.2000**
(21) Anmeldenummer: 94909094.8
(22) Anmeldetag: 01.03.1994
(51) Int. Cl.: F28D 20/00, B60H 1/00

(54) **LATENTWÄRMESPEICHER**
LATENT-HEAT ACCUMULATOR
ACCUMULATEUR DE CHALEUR LATENTE

(30) Priorität: 08.03.1993 DE 4307217
(43) Veröffentlichungstag der Anmeldung: 27.03.1996
(73) Patentinhaber: Schümann Sasol GmbH, 20457 Hamburg (DE)
(72) Erfinder: HILDEBRAND, Günter, D-06729 Rehmsdorf (DE); MATTHÄI, Michael, D-24558 Henstedt-Ulzburg (DE); FIEBACK, Klaus, D-10369 Berlin (DE); BAUERFEIND, Götz, D-04613 Lucka (DE)
(74) Vertreter: Müller, Enno, Dipl.-Ing.
(86) Internationale Anmeldenummer: EP9400591
(87) Internationale Veröffentlichungsnummer: WO9420808

(56) Entgegenhaltungen:
- EP-A- 0 294 500
- EP-A- 0 302 273
- DE-A- 3 725 162
- DE-A- 4 007 001
- DE-A- 4 122 436
- PATENT ABSTRACTS OF JAPAN vol. 007, no. 020 (M-188) 26. Januar 1983 & JP,A,57 175 890 (TOKYO SHIBAURA DENKI KK) 28. Oktober 1982
- PATENT ABSTRACTS OF JAPAN vol. 007, no. 173 (M-232) 30. Juli 1983 & JP,A,58 075 690 (TOKYO SHIBAURA DENKI KK) 7. Mai 1983
- PATENT ABSTRACTS OF JAPAN vol. 007, no. 279 (M-262) 13. Dezember 1983 & JP,A,58 156 151 (TOKYO SHIBAURA DENKI KK) 17. September 1983

## Beschreibung

Die Erfindung betrifft einen Latentwärmespeicher für ein einen Verbrennungsmotor aufweisendes Kraftfahrzeug, nach dem ersten Teil des Patentanspruch 1.

Latentwärmespeicher und Latentwärmespeichermaterialien sind im Stand der Technik bereits in vielfältigen Ausführungsformen bekannt. Bspw. ist auf die DE-A1 27 41 829 zu verweisen. Hieraus ist es bekannt, in einer Kunststoffhülle eingeschlossene Paraffinmengen als Wärmespeichermedium in einem Latentwärmespeicher zu benutzen. Die Kunststoffhüllen befinden sich wiederum in einem mit Wasser gefüllten Speichergefäß. Bei derartigen Latentwärmespeichern erfolgt der Wärmetransport lediglich über Wärmeleitung durch die Kunststoffumhüllung an das Paraffin. Man bezeichnet solche Speicher als statische Speicher. Weiterhin sind sogenannte dynamische Latentwärmespeicher bekannt, wozu bspw. auf die DD 23 68 62 und die DD 28 01 13 verwiesen wird. Zum Stand der Technik ist in diesem Zusammenhang weiter auf die DE-A1 41 22 859 zu verweisen. Als Latentwärmespeichermaterialien kommen insbesondere Salze, wie sie in den genannten Druckschriften erwähnt sind, aber auch neuerdings Paraffin bzw. paraffinische Kohlenwasserstoffe in verschiedensten Ausgestaltungen in Frage. Man spricht auch von paraffinischen Erdölkohlenwasserstoffen. Zu letzterem ist insbesondere auch auf die nicht vorveröffentlichte deutsche Patentanmeldung 42 43 202 zu verweisen.

Aus dem Patent Abstract Japan, vol. 007, no. 020 (M-188) ist ein Latentwärmespeicher bekannt, bei dem ein Wärmetauscher in Form eines Rohres zur Ein- und Auskopplung von Wärme von einer Mehrzahl von Latentwärmespeicherschichten schalenartig konzentrisch umgeben ist. Die einzelnen Latentwärmespeicherschichten enthalten Latentwärmespeichermaterial unterschiedlicher Phasenübergangstemperaturen. Dabei ist kennzeichnend für diesen bekannten Latentwärmespeicher, daß die Phasenübergangstemperaturen der Schichten ausgehend von dem Wärmetauscher, d.h. von innen nach außen, ansteigen.

Auch die erwähnten Latentwärmespeicher für Kraftfahrzeuge sind bereits in verschiedenen Ausführungsformen vorgestellt und zumindest versuchsweise auch bereits in der Praxis eingesetzt worden. Hierbei wird die gespeicherte Wärme dazu genutzt, im Falle eines Kaltstartes den Motor eines Kraftfahrzeuges vorzuwärmen, eben mittels aus dem Latentwärmespeicher ausgekoppelter Wärme. Um möglichst lange Phasen, in welchen das Kraftfahrzeug nicht in Betrieb ist, überbrücken zu können, ist es erforderlich, den Latentwärmespeicher in geeigneter Weise wärmezudämmen. Gewöhnliche Wärmedämmvorrichtungen, wie bspw. auf Schaumstoffbasis, reichen hierzu in der Regel nicht aus. Man hat daher auch bereits vorgeschlagen, den Latentwärmespeicher mit einem evakuierten Raum zu umgeben, entsprechend dem Thermoskannenprinzip. Letzteres erbringt zwar die gewünschte Wärmedämmung, ist aber vergleichsweise aufwendig.

Im Hinblick auf den vorstehend beschriebenen Stand der Technik wird eine der vorliegenden Erfindung zugrundeliegende Problemstellung zunächst darin gesehen, einen Latentwärmespeicher für ein Kraftfahrzeug anzugeben, der bei ausreichender Wärmedämmung vergleichsweise günstig herstellbar ist.

Diese Problemstellung ist beim Gegenstand des Anspruches 1 gelöst.

Speziell sind hochreine Paraffincompounds bevorzugt. Darüber hinaus kommt auch bevorzugt ein anderes Speicherprinzip, nämlich im wesentlichen ein statisches Latentwärmespeicherprinzip, wie eingangs grundsätzlich erwähnt, zur Anwendung. Insbesondere kann das zweite Latentwärmespeichermaterial Paraffin bzw. paraffinischer Kohlenwasserstoff sein. Paraffin hat den Vorteil, daß eine Umweltschädlichkeit, wenn bspw. einmal ein Speicher auslaufen sollte, in keiner Weise gegeben ist. Weil der Schmelzpunkt des zweiten Latentwärmespeichermaterials niedriger ist als der Schmelzpunkt des ersten Latentwärmespeichermaterials bedeutet dies, daß in der Abkühlungsphase das zweite Latentwärmespeichermaterial noch flüssig ist, wenn das erste Latentwärmespeichermaterial bereits bis auf seinen Erstarrungspunkt abgekühlt ist. Dadurch, daß das zweite Latentwärmespeichermaterial in dem zweiten Latentwärmespeicher den ersten Latentwärmespeicher umgibt und dessen Wärmedämmschicht somit darstellt, wird durch die durch den Arbeitsbereich des zweiten Latentwärmespeichermaterials vorgegebene Temperaturspanne über einen sehr langen Zeitraum eine praktisch gleiche Temperatur in dem ersten Latentwärmespeichermaterial aufrechterhalten, obgleich ein Wärmeabfluß nach außen, eben durch das zweite Latentwärmespeichermaterial hindurch, stattfindet. Hiermit ist auch erreicht, daß das erste Latentwärmespeichermaterial sich vergleichsweise sehr langsam seiner Erstarrungstemperatur nähert, was wiederum bedeutet, daß nur eine sehr geringe Temperaturdifferenz über die Tiefe des ersten Latentwärmespeichers gegeben ist und entsprechend annähernd schlagartig die Erstarrung im gesamten ersten Latentwärmespeicher einsetzt. Die Temperaturdifferenz wird allerdings bevorzugt nicht sonderlich groß gewählt, sondern im Bereich einiger Kelvin. Ein praktisch naher Wert ist bspw. 5 Kelvin. Es können aber auch bspw. 2, 3, 7 oder 9 Kelvin sein. Während der erste Latentwärmespeicher bevorzugt als dynamischer Latentwärmespeicher entsprechend der bereits eingangs erwähnten deutschen Patentanmeldung 42 43 202.2 ausgebildet ist, ist das in der Umhüllung befindliche Latentwärmespeichermaterial, das zusammen mit der Umhüllung den zweiten Latentwärmespeicher bildet, bevorzugt im Sinne eines quasistatischen Latentwärmespeichers ausgebildet. Hierbei ist sogar weiter bevorzugt eine Optimierung dahingehend getroffen, daß das Latentwärmespeichermaterial einen Schäumungszusatz, bspw. in Form eines bekannten oberflächenentspannenden Mittels, besitzt. Die Schaumneigung des Latentwärmespeichermaterials, bspw. des Paraffins, ist bewußt unterstützt. Im Erstarrungszustand liegen praktisch den gesamten zweiten Latentwärmespeicher durchsetzend Schäumungsbereiche vor, welche einen Wärmedurchgangswert des zweiten Latentwärmespeichers vorteilhaft im Sinne einer Minderung beeinflussen. Weiter ist der zweite Latentwärmespeicher zu einem sehr großen Teil gefüllt, bspw. zu 90 bis 95 %. Das Restvolumen kann durch bspw. Wasser, ggf. auch Öl, ausgefüllt sein als Wärmeträgermedium. Letzteres erbringt - in sehr geringem Ausmaß - ein gewisses dynamisches Verhalten, weshalb weiter oben von einem quasistatischen Latentwärmespeicher gesprochen worden ist. Der - wenn auch geringfügige - dynamische Charakter des Latentwärmespeichers ist dahingehend von besonderer Bedeutung, daß hierdurch eine gewünschte Schaumbildung ganz wesentlich gefördert wird. (Im Erstarrungszustand) geschäumtes Paraffin oder paraffinischer Kohlenwasserstoff ist hinsichtlich der erreichbaren Wärmedämmwerte noch vorteilhafter als homogen erstarrter paraffinischer Kohlenwasserstoff. Das Verhältnis von Wärmetransportmedium, also bspw. Öl, zu paraffinischem Kohlenwasserstoff kann bspw. auch 1:100 sein. Ein Restvolumen in dem Latentwärmespeicher bleibt frei. Im übrigen kann in diesem Latentwärmespeicher ein Über- oder Unterdruck herrschen. Der Überdruck wird sich realistischerweise im Bereich bis etwa 1 A. bewegen, der Unterdruck im Bereich von 0,1 bis 0,5 A bis hin zu fast vollständigem Vakuum. Bevorzugt ist der Unterdruck im zweiten Latentwärmespeicher aber vergleichsweise gering gehalten. Im einzelnen ist noch bezüglich des Latentwärmespeichers für ein Kraftfahrzeug, wie er hier bevorzugt betrachtet ist, vorgesehen, daß der erste Latentwärmespeicher in seinem unteren Bereich einen Wärmetauscher besitzt, der den Latentwärmespeicher bevorzugt durchsetzt und zur Einkopplung von Motorabwärme in den Latentwärmespeicher dient. Vorgeschaltet zu diesem den ersten Latentwärmespeicher in seinem unteren Bereich durchsetzenden Wärmetauscher ist ein Umschaltventil vorgesehen, mit welchem in dem Fall, daß Wärme aus dem ersten Latentwärmespeicher ausgekoppelt werden soll, das den Wärmetauscher und eine zugehörige Leitung durchsetzende Wärmeträgermedium, im Kraftfahrzeug gewöhnlich Wasser, durch einen zweiten Wärmetauscher geleitet werden kann, welcher aus dem ersten Latentwärmespeicher im oberen Bereich, vorzugsweise wiederum den ersten Latentwärmespeicher durchsetzend, Wärme auskoppeln kann. Das Wärmeträgermedium, welches den unteren, ersten Wärmetauscher durchsetzt, strömt nach dem Wärmetauscher, also außerhalb des Latentwärmespeichers, zum Kraftfahrzeugkühler, durchsetzt diesen, und sodann zum Motor, während das Wärmeträgermedium, welches den zweiten Wärmetauscher durchströmt, im Bypass, zum Kühler unmittelbar zum Motor strömt.

Der vorstehend beschriebenen Ausgestaltung eines Latentwärmespeichers für ein Kraftfahrzeug liegt auch ein allgemeinerer Gedanke zugrunde, der die Zusammenschaltung bzw. Zusammen-Anordnung von Latentwärmespeichern an sich betrifft. Auf dieser allgemeineren Ebene betrifft die Erfindung einen Latentwärmespeicher, vorzugsweise dynamischer Art, mit einem ersten Latentwärmespeichermaterial, wobei der Latentwärmespeicher eine Außenwand aufweist. Um günstigere wärmetechnische Verhältnisse, insbesondere im Sinne einer Wärmedämmung zu erreichen, schlägt hierbei die Erfindung vor, daß ein wesentlicher Teil der Außenwand von einem zweiten Latentwärmespeichermaterial wie bspw. Paraffin oder paraffinischen Kohlenwasserstoffen zur Wärmedämmung überdeckt ist. Es kann sich hierbei auch hinsichtlich des Materials etwa um bekannte Salze handeln. Es ist möglich, daß das zweite Latentwärmespeichermaterial nicht vollständig in einem gesonderten Behältnis aufgenommen ist. Bspw. kann die Außenwand des ersten Latentwärmespeichers bereits eine (innere) Begrenzung eines Raumes darstellen, in welchem sich das zweite Latentwärmespeichermaterialbefindet. Auch in diesem Zusammenhang treffen die oben bereits angesprochenen bevorzugten Ausgestaltungen zu, daß das zweite Latentwärmespeichermaterial einen niedrigeren Schmelzpunkt aufweist als das erste Latentwärmespeichermaterial, daß das zweite Latentwärmespeichermaterial ein Schäummittel enthält und gegebenenfalls Öl als Wärmetransportmedium. Für den Fall, daß das zweite Latentwärmespeichermaterial in einem gesonderten Behälter aufgenommen ist, ist es auch bevorzugt, daß zumindest eine Wandung dieses Behälters flexibel ausgebildet ist. Solange das zweite Latentwärmespeichermaterial sich in seiner flüssigen Phase befindet, kann aufgrund einer solchen flexiblen Wandung ein derartiger Latentwärmerspeicher sich an eine auch unregelmäßige Oberflächenstruktur der Außenwand des ersten Latentwärmespeichers leicht anpassen. Bspw. kann die Wandung hierzu aus einer Kunststofffolie bestehen.

Ein weiterer allgemeiner Gedanke der Erfindung betrifft die Verwendung eines vorzugsweise statischen Latentwärmespeichers als Wärmedämmelement bzw. die Verwendung von Latentwärmespeichermaterial als Wärmedämmaterial. Während bislang Latentwärmespeichermaterial lediglich hinsichtlich seiner Wärmespeichereigenschaften genutzt worden ist, stellt insbesondere Latentwärmespeichermaterialauf Paraffin-Basis, speziell auf Basis compoundierter Paraffine, zusammen mit den übrigen an sich bekannten Eigenschaften eines Latentwärmespeichers , ein Wärmedämmmedium bzw. ein Wärmedämmelement dar, das auch beachtliche Wärmedämmwerte besitzt. Bspw. beträgt die Wärmeleitzahl bei Paraffin ca. 0,1 W/mK, während sie bei einem üblichen Wärmedämmstoff bei 0,04 W/mK liegt. Wenn also auch die Wärmeleitzahl eines üblichen Wärmedämmstoffs nicht ganz erreicht wird, liegt doch eine beachtliche Wärmedämmung vor.

Die besondere Eigenschaft eines Wärmedämmelementes in Form eines Latentwärmespeichers läßt sich besonderes vorteilhaft beispielsweise auch bei Prozeßreaktoren, insbesondere biologischen Prozeßreaktoren, einsetzen. Bei derartigen Prozeßreaktoren kommt es auf eine möglichst konstante Temperaturführung an. Innerhalb des Reaktors entstehende Wärme kann bei diesem Erfindungsgedanken bspw. von einem im Sinne einer Wärmedämmung den Reaktor umgebenden Latentwärmespeicher aufgenommen werden, ohne daß sich dessen Temperatur erhöht und in Rückkopplung zu einer Temperaturerhöhung im Prozeßreaktor führt. Umgekehrt kann ein Temperaturabfall in der Umgebung des mit einem solchermaßen als Wärmedämmelement eingesetzten Latentwärmespeicher umgebenden Prozeßreaktor zwar zur Wärmeauskopplung aus dem Wärmedämmelement bzw. dem Latentwärmespeicher führen, wobei aber die Temperatur des Wärmedämmelementes sich praktisch nicht ändert. Der in diesem Zusammenhang erfindungsgemäß verwendete Latentwärmespeicher kann insbesondere ein quasistatischer Latentwärmespeicher sein in der Ausgestaltung, wie er weiter vorne im einzelnen als zweiter Latentwärmespeicher beschrieben worden ist.

Nachstehend ist die Erfindung des weiteren anhand der beigefügten Zeichnung erläutert, die jedoch lediglich Schaubilder und Ausführungsbeispiele wiedergibt. Im einzelnen zeigt hierbei:
- Fig. 1: eine beispielhafte Darstellung in Form eines Diagrammes des Temperaturverlaufes bei einer konventionellen Wärmedämmung und bei einer Wärmedämmung mittels eines Latentwärmespeichers,in der Aufheizphase;
- Fig. 2: eine Darstellung in Form eines Diagramms eines Temperaturverlaufs gemäß Fig. 1, jedoch in der Abkühlphase;
- Fig. 3: eine schematische Darstellung eines Kfz-Latentwärmespeichers mit Wärmedämmung.

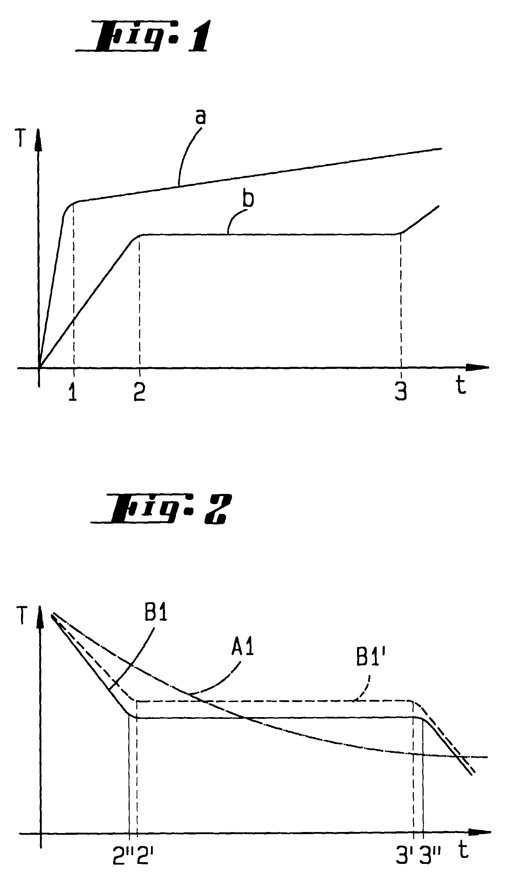

In Fig. 1 ist auf der Ordinate die Temperaturen, auf der Abszisse die Zeit aufgetragen. Bei einer konventionellen Wärmedämmung steigt in einer Aufheizphase eines wärmegedämmten Gegenstandes oder Speichers die Temperatur, aufgrund des sehr geringen nur möglichen Wärmeabflusses, sehr schnell an, in dem dargestellten Diagramm bis etwa bis zum Punkt 1. Ab etwa dieser bestimmten Temperatur nimmt der Wärmefluß durch die Wärmedämmung, allein schon wegen der größer werdenden treibenden Temperaturdifferenz, erheblich zu, so daß sich nur noch ein vergleichsweise geringer Anstieg der Temperatur in dem zu dämmenden Gegenstand, Speicher oder dgl. ergibt (bei vorausgesetzt weiterer Zufuhr einer konstanten Wärmemenge pro Zeit). Bei einem als Wärmedämmelement eingesetzten Latentwärmespeicher steigt dagegen die Temperatur, bzw. unterstellt gleiche Wärmezufuhr pro Zeit, in dem zu dämmenden Gegenstand, Speicher, Reaktor oder dgl. nicht so schnell an wie bei einer konventionellen Wärmedämmung, sondern in einer längeren Zeit, bis die Phasenumwandlungstemperatur des Latentwärmespeichers erreicht ist, was in dem Diagramm etwa am Punkt 2 gegeben ist. Wesentlich ist aber dann, und hier liegt der grundsätzliche Unterschied, daß in einer Zeitspanne, die zwischen den in dem Diagramm mit den Punkten 2 und 3 gekennzeichneten Zeitpunkten gegeben ist, die Temperatur in dem als Wärmedämmelement eingesetzten Latentwärmespeicher sich praktisch nicht ändert. Bei einer konventionellen Wärmedämmung steigt die Temperatur dagegen auch in diesem Zeitraum ständig an. Ab dem Punkt 3 ist bei einem als Wärmedämmelement eingesetzten Latentwärmespeicher dann jedoch ein erheblicher Temperaturanstieg zu beobachten, der sogar steiler ist als bei einer herkömmlichen Wärmedämmung nach Erreichen des Abflachungszeitpunktes, der in dem Diagramm mit der Ziff. 1 bezeichnet ist. Im weiteren Verlauf verflacht jedoch auch die Temperaturkurve des als Wärmedämmelement eingesetzten Latentwärmespeichers. Es versteht sich, daß die Darstellung nur qualitativ zu verstehen ist. Es kommt im einzelnen auf das jeweils eingesetzte (konventionelle) Wärmedämmaterial (Wärmeleitzahl, Dicke etc.) bzw. das jeweils eingesetzte Latentwärmespeichermaterial in dem Latentwärmespeicher an.

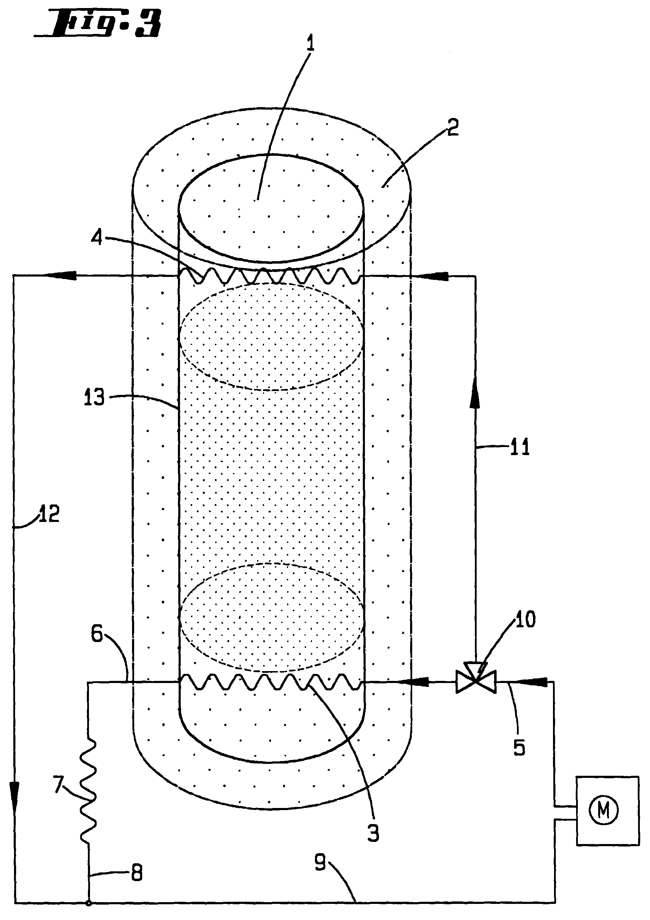

In Fig. 2 sind die Verhältnisse beim Auskoppeln von Wärme dargestellt. Hier ist also bspw. an einen wärmegedämmten Wärmespeicher gedacht, aus welchem, etwa im Sinne des nachstehenden noch beschriebenen Latentwärmespeichers für einen Kraftfahrzeugmotor, durch einen Wärmetauscher Wärme ausgekoppelt wird.

Bei der konventionellen Wärmedämmung ergibt sich ein Temperaturverlauf, wie er durch die Kurve A1 dargestellt ist, die bekanntlich in der Regel eine Kurve entsprechend einer Exponentialfunktion ist. Bei einem Latentwärmespeicher als Wärmedämmelement ergibt sich dagegen in dem wärmegedämmten Speicher oder sonstigen Gegenstand ein Temperaturverlauf, wie er durch die Kurve B1 dargestellt ist. In strichliniierter Darstellung ist durch die Kurve B1' angedeutet, welcher Temperaturverlauf sich in dem wärmegedämmten Behältnis ergibt, wenn als Wärmedämmelement ein Latentwärmespeicher, der durch den Temperaturverlauf der Kurve B1 gekennzeichnet ist, eingesetzt ist.

Es ist zu erkennen, daß der Temperaturverlauf in dem wärmegedämmten Behältnis für den Fall, daß als Wärmedämmelement ein Latentwärmespeicher eingesetzt wird, zunächst vergleichsweise rasch abfällt, nämlich bis zu einem Zeitpunkt 2', sodann über einen langen Zeitraum, nämlich bis zu dem mit 3' gekennzeichneten Zeitpunkt, praktisch konstant bleibt und sodann wieder abfällt im Sinne einer exponentiellen Kurve. Entsprechende Zeitpunkte 2'' und 3'', zu denen sich der Kurvenverlauf markant ändert, können auch im Temperaturverlauf des als Wärmedämmelement eingesetzten Latentwärmespeichers beobachtet werden.

In Fig. 3 ist in Form eines schematischen Schaltbildes ein Latentwärmespeicher 1 für ein Kraftfahrzeug dargestellt, der durch einen zweiten Latentwärmespeicher 2 zum Zwecke der Wärmedämmung umgeben ist.

Bei dem Latentwärmespeicher 1 kann es sich bspw. insbesondere hinsichtlich des Latentwärmespeichermaterials und des sonstigen Aufbaus um einen Latentwärmespeicher handeln, wie er in der auch eingangs bereits erwähnten deutschen Patentanmeldung P 42 43 202.2 beschrieben ist. Der dargestellte Latentwärmespeicher 1 zeichnet sich weiter dadurch aus, daß er in seinem unteren Bereich von einem Wärmetauscher 3 und in seinem oberen Bereich von einem Wärmetauscher 4 durchsetzt ist. Der wärmetauscher 1 ist über eine Leitung 5 mit dem Motor verbunden. Den Motor durchströmendes Kühlmedium, also Kühlwasser, strömt durch die Leitung 5 in den Wärmetauscher 3 und weiter durch die Leitung 6 in den Kühler 7 des Kraftfahrzeuges und über die Leitungen 8, 9 zurück in den Motor M. In der Leitung 5 ist ein Umschaltventil 10 angeordnet, wodurch die Leitungsverbindung vom Motor über die Leitung 11 zu dem Wärmetauscher 4 hergestellt werden kann. Bei einer solchen Schaltung, die bei einem Kaltstart des Motors M vorgenommen wird, durchströmt das Wärmeträgermedium, also das Kühlwasser, über die Leitungen 5 und 11 den Wärmetauscher 4, wodurch Wärme aus dem Latentwärmespeicher 1 ausgekoppelt wird. Weiter strömt das Wärmeträgermedium sodann über die Leitung 12 und die Leitung 9 wieder zu dem Motor M.

Der Latentwärmespeicher 2 umgibt den Latentwärmespeicher 1 mantelartig. Hierbei kann auch eine innere Wandung bezüglich des Latentwärmespeichers 2 vorgesehen sein. Andererseits kann aber auch eine Außenwand 13 sogleich die Innenwand des Latentwärmespeichers 2 bilden. Gegebenenfalls ist es auch möglich, den Latentwärmespeicher 1 auf den Stirnflächen des Latentwärmespeichers 1 überdeckend vorzusehen.

Bei dem Latentwärmespeicher 2 handelt es sich um einen statischen bzw. quasistatischen Latentwärmespeicher, in dem nur ein geringer Überdruck oder Unterdruck herrscht und geringste Mengen an Wärmetransportmittel, z. B. wenige Wassertropfen enthalten sind.

## Patentansprüche

1. Latentwärmespeicher für ein einen Verbrennungsmotor (M) aufweisendes Kraftfahrzeug, mit einem ein Latentwärmespeichermaterialenthaltenden Latentwärmespeicher (1), wobei der Latentwärmespeicher (1) von einem Wärmetauscher (3) durchsetzt ist, zur Ein- und Auskopplung von Wärme und eine Umhüllung zur Wärmedämmung vorgesehen ist, wobei die Umhüllung durch einen ein zweites Latentwärmespeichermaterial enthaltenden zweiten Latentwärmespeicher (2) gebildet ist, dadurch gekennzeichnet, daß das zweite Latentwärmespeichermaterial einen niedrigeren Schmelzpunkt aufweist als das erste Latentwärmespeichermaterial.

2. Latentwärmespeicher nach Anspruch 1, dadurch gekennzeichnet, daß das Latentwärmespeichermaterial des zweiten Latentwärmespeichers mit einem Schaumbildner versehen ist.

3. Latentwärmespeicher nach Anspruch 1, dadurch gekennzeichnet, daß der zweite Latentwärmespeicher (2) ein statischer Latentwärmespeicher ist und daß das zweite Latentwärmespeichermaterial mit einem Schaumbildner versehen ist.

4. Latentwärmespeicher nach einem der vorhergehenden Ansprüche, dadurch gekennzeichnet, daß das zweite Latentwärmespeichermaterial in einem gesonderten Behälter aufgenommen ist, wobei der gesonderte Behälter in seiner Wandung zumindest teilweise flexibel ausgebildet ist.

5. Latentwärmespeicher nach einem der vorhergehenden Ansprüche, dadurch gekennzeichnet, daß das Latentwärmespeichermaterial des zweiten Latentwärmespeichers einen geringen Anteil an Wärmetransportmittel, bspw. in Form von einigen Wassertropfen aufweist.

6. Latentwärmespeicher nach einem der vorhergehenden Ansprüche, dadurch gekennzeichnet, daß in dem Latentwärmespeicher ein Unter- oder Überdruck herrscht.

7. Prozeßreaktor, insbesondere biologischer Prozeßreaktor, mit einem Latentwärmespeicher nach Anspruch 1, gekennzeichnet durch eine den Prozeßreaktor umgebende Wärmedämmung gebildet durch den Latentwärmespeicher, zur Aufnahme von innerhalb des Prozeßreaktors entstehender Wärme.

8. Prozeßreaktor nach Anspruch 7, dadurch gekennzeichnet, daß das Latentwärmespeichermaterial des Latentwärmespeichers mit einem Schaumbildner versehen ist.

9. Prozeßreaktor nach einem der Ansprüche 7 oder 8 dadurch gekennzeichnet, daß das Latentwärmespeichermaterial des Latentwärmespeichers einen geringen Anteil an Wärmetransportmittel, bspw. in Form von einigen Wassertropfen, aufweist.

10. Prozeßreaktor nach einem der Ansprüche 7 bis 9, dadurch gekennzeichnet, daß der Latentwärmespeicher einen Unter- oder Überdruck aufweist.

## Claims

1. Latent heat accumulator for a vehicle with an internal combustion engine (M), with a latent heat accumulator (1) comprising latent heat accumulator material, wherein the latent heat accumulator (1) is interspersed with a heat exchanger (3) for the input and output of heat and a cladding is provided for thermal insulation, wherein the cladding is formed by a second latent heat accumulator (2) comprising a second latent heat accumulator material, characterised in that the second latent heat accumulator material has a lower melting point than the first latent heat accumulator material.

2. Latent heat accumulator according to claim 1, characterised in that the latent heat accumulator material of the second latent heat accumulator is provided with a foaming agent.

3. Latent heat accumulator according to claim 1, characterised in that the second latent heat accumulator (2) is a static latent heat accumulator and that the second latent heat accumulator material is provided with a foaming agent.

4. Latent heat accumulator according to one of the previous claims, characterised in that the second latent heat accumulator material is accommodated in a separate receptacle, wherein the wall of the separate receptacle is at least in part flexibly constructed.

5. Latent heat accumulator according to one of the previous claims, characterised in that the latent heat accumulator material of the second latent heat accumulator has a small proportion of heat transfer media, for example in the form of several drops of water.

6. Latent heat accumulator according to one of the previous claims, characterised in that there is low pressure or excess pressure in the latent heat accumulator.

7. Process reactor, in particular a biological process reactor, with a latent heat accumulator according to claim 1, characterised by a thermal insulation surrounding the process reactor formed by the latent heat accumulator, for the absorption of heat accruing inside the process reactor.

8. Process reactor according to claim 7, characterised in that the latent heat accumulator material of the latent heat accumulator is provided with a foaming agent.

9. Process reactor according to one of the claims 7 or 8, characterised in that the latent heat accumulator material of the latent heat accumulator has a small proportion of heat transfer media, for example in the form of several drops of water.

10. Process reactor according to one of the claims 7 to 9, characterised in that the latent heat accumulator has low or excess pressure.

## Revendications

1. Accumulateur de chaleur latente pour un véhicule automobile présentant un moteur à combustion interne (M) avec un accumulateur de chaleur latente (1) contenant un matériau accumulateur de chaleur latente, l'accumulateur de chaleur latente (1) étant traversé par un échangeur de chaleur (3), pour assurer l'alimentation en chaleur et l'extraction de la chaleur et une enveloppe pour assurer l'isolation thermique étant prévue, l'enveloppe étant constituée par un deuxième accumulateur de chaleur latente (2) contenant un deuxième matériau accumulateur de chaleur latente, caractérisé en ce que le deuxième matériau accumulateur de chaleur latente a un point de fusion plus bas que le premier matériau accumulateur de chaleur latente.

2. Accumulateur de chaleur latente selon la revendication 1, caractérisé en ce que le matériau accumulateur de chaleur latente du deuxième accumulateur de chaleur latente est doté d'un formateur de mousse ou de structure alvéolaire.

3. Accumulateur de chaleur latente selon la revendication 1, caractérisé en ce que le deuxième accumulateur de chaleur latente (2) est un accumulateur de chaleur latente statique, et en ce que le deuxième matériau accumulateur de chaleur latente est doté d'un formateur de mousse ou de structure alvéolaire.

4. Accumulateur de chaleur latente selon l'une des revendications précédentes, caractérisé en ce que le deuxième matériau accumulateur de chaleur latente est logé dans un récipient séparé, le récipient séparé étant réalisé au moins partiellement flexible dans sa paroi.

5. Accumulateur de chaleur latente selon l'une des revendications précédentes, caractérisé en ce que le matériau accumulateur de chaleur latente du deuxième accumulateur de chaleur latente présente une faible proportion d'agent caloporteur, par exemple sous la forme de quelques gouttes d'eau.

6. Accumulateur de chaleur latente selon l'une des revendications précédentes, caractérisé en ce qu'une dépression ou une surpression règne dans l'accumulateur de chaleur latente.

7. Réacteur de processus, en particulier réacteur de processus biologique avec un accumulateur de chaleur latente selon la revendication 1, caractérisé par une isolation thermique entourant le réacteur de processus et constituée par l'accumulateur de chaleur latente pour absorber la chaleur produite à l'intérieur du réacteur de processus.

8. Réacteur dc processus selon la revendication 1, caractérisé en ce que le matériau accumulateur de chaleur latente de l'accumulateur de chaleur latente est doté d'un formateur de mousse ou de structure alvéolaire.

9. Réacteur de processus selon l'une des revendications 7 ou 8, caractérisé en ce que le matériau accumulateur de chaleur latente de l'accumulateur de chaleur latente présente une faible proportion d'agent caloporteur, par exemple sous la forme de quelques gouttes d'eau.

10. Réacteur de processus selon l'une des revendications 7 à 9, caractérisé en ce que l'accumulateur de chaleur latente présente une dépression ou une surpression.
